# EUROPEAN PATENT APPLICATION

(11) **EP 4 601 032 A1**
(43) Date of publication of application: **13.08.2025**
(21) Application number: 23875186.1
(22) Date of filing: 04.10.2023
(51) Int. Cl.: H01M 4/36, H01M 4/485, H01M 4/62, H01M 4/02

(54) **NEGATIVE ELECTRODE ACTIVE MATERIAL FOR LITHIUM SECONDARY BATTERY, METHOD FOR PREPARING SAME, AND LITHIUM SECONDARY BATTERY COMPRISING SAME**

(30) Priority: 07.10.2022 KR 20220128445
(71) Applicant: Marshal Cap CO., Ltd., Hanam-si, Gyeonggi-do 12925 (KR)
(72) Inventor: KIM, Yang Soo, Jeonju-si Jeollabuk-do 54922 (KR); MOON, Won Jin, Buk-gu Gwangju 61256 (KR); KIM, Jong Phil, Dongnae-gu Busan 47798 (KR); BAE, Jong Sung, Haeundae-gu Busan 48103 (KR)
(74) Representative: Mewburn Ellis LLP
(86) International application number: PCT/KR2023/015187
(87) International publication number: WO 2024/076122

(57) **Abstract**

The present invention relates to a negative electrode active material for a lithium secondary battery, a method for preparing same, and a lithium secondary battery comprising same. More specifically, the negative electrode active material comprises one selected from Li_{1.1}Ti_{0.9}O₂ and a mixture in which Li_{1.1}Ti_{0.9}O₂ and carbon nanotubes (CNTs) are mixed in a weight ratio of 8: 2 to 9: 1. The negative electrode active material for a lithium secondary battery, comprising the above-described components has an R-3m structure, and provided is a lithium secondary battery which exhibits high capacity and excellent lifespan characteristics, and in particular, exhibits high capacity during high-rate charging and discharging.

## Description

### TECHNICAL FIELD

The present invention relates to a negative electrode active material for lithium secondary batteries, a method of preparing the same, and a lithium secondary battery including the same, and more specifically, to a negative electrode active material for lithium secondary batteries having an R-3m structure and exhibiting a high capacity and excellent lifespan characteristics, particularly exhibiting a high capacity during high-rate charge and discharge, a method of preparing the same, and a lithium secondary battery including the same.

### BACKGROUND ART

Lithium secondary batteries, which have recently been drawing attention as a power source for portable small electronic devices, are batteries using organic electrolytes and thus showing a discharge voltage more than twice as high as that of batteries using conventional alkaline aqueous solutions, thereby exhibiting high energy density.

The positive electrode active material of lithium secondary batteries is mainly composed of oxides of lithium and transition metals with a structure that allows lithium intercalation, such as LiCoO₂, LiMn₂O₄, and LiNi₁₋ₓCoₓO₂ (0 < x < 1).

In addition, various forms of carbon-based materials which allow lithium intercalation and deintercalation of lithium, including artificial graphite, natural graphite, and hard carbon, have been applied as negative electrode active materials. Among the carbon-based materials, graphite such as artificial graphite or natural graphite has a low discharge voltage of -0.2 V compared to lithium, so a battery using graphite as a negative electrode active material exhibits a high discharge voltage of 3.6 V, thereby providing an advantage in terms of energy density of a lithium battery. In addition, its excellent reversibility guarantees a long lifespan of a lithium secondary battery, and therefore, graphite is the most widely used. However, when an electrode plate is manufactured using graphite as an active material, the electrode plate density is low, so there is a problem in that the capacity is low in terms of energy density per unit electrode plate volume. In addition, at high discharge voltages, a side reaction between graphite and an organic electrolyte is likely to occur, which may lead to malfunction of the battery, and risk of ignition or explosion due to overcharging.

To solve these problems, negative electrode active materials of oxides have been developed recently. For example, amorphous tin oxide developed by Fujifilm exhibits a high capacity of 800 mAh/g by weight. However, this tin oxide has a critical problem that the initial irreversible capacity is about 50%, and there are also serious secondary problems such as some of the tin oxide being reduced from the oxide to tin metal during charge and discharge, making it more difficult to be used in batteries.

In addition, Japanese Patent Publication No. 2002-216753 describes a negative electrode active material of LiₐMg_{b}VO_{c} (0.05≤a≤3, 0.12≤b≤2, 2≤2c-a-2b≤5) as an oxide negative electrode. In addition, the 2002 Summary of the Japanese Battery Forum No. 3B05 presented the lithium secondary battery negative electrode characteristics of Li_{1.1}V_{0.9}O₂.

However, since the oxide negative electrode has not yet demonstrated satisfactory battery performance, research needs to be conducted continuously.

### DETAILED DESCRIPTION OF THE INVENTION

### TECHNICAL PROBLEM

An object of the present invention is to provide a negative electrode active material for lithium secondary batteries having an R-3m structure that may be used to manufacture a lithium secondary battery exhibiting a high capacity and excellent lifespan characteristics, particularly exhibiting a high capacity at high-rate charge and discharge, and a method of preparing the same.

Another object of the present invention is to provide a lithium secondary battery including the negative electrode active material for lithium secondary batteries having the R-3m structure.

### TECHNICAL SOLUTION

An object of the present intention is achieved by providing a negative electrode active material for lithium secondary batteries having an R-3m structure, the negative electrode active material including one selected from the group consisting of Li_{1.1}Ti_{0.9}O₂ and a mixture of Li_{1.1}Ti_{0.9}O₂ and carbon nanotube (CNT) in a weight ratio of 8:2 to 9:1, wherein the Li_{1.1}Ti_{0.9}O₂ is prepared such that the molar ratio of Li: Ti is 1.1: 0.9 through the following Schemes I and II:

<Scheme I> 1.1(Li₂CO₃) + 0.3(Ti₂O₃) → 2(Li_{1.1}Ti_{0.3}O) + 1.1(CO₂)

<Scheme II> 2(Li_{1.1}Ti_{0.3}O) + 0.6(Ti₂O₃) → 2 (Li_{1.1}Ti_{0.9}O₂)

According to a preferable aspect of the present invention, the negative electrode active material includes Li_{1.1}Ti_{0.9}O₂, whose 2*θ* (theta) value during charge and discharge varies in an *in-situ* X-ray diffraction (XRD) measurement voltage range of 1.5 V to 0.0 V and XRD peaks vary in ranges of 34° to 36°, 42° to 43°, 56° to 57°, and 62° to 62.5°.

According to a more preferable aspect of the present invention, the negative electrode active material includes Li_{1.1}Ti_{0.9}O₂, in which no Li₂TiO₃ phase is detected between 18° and 25° in *in-situ* XRD measurement.

In addition, an object of the present invention may also be achieved by providing a method of preparing a negative electrode active material for lithium secondary batteries having an R-3m structure, the method including: a mixture preparation step of preparing a mixture by mixing Li₂CO₃ and Ti₂O₃ in a solid state so that the molar ratio of Li: Ti is 1.1: 0.9; and a drying heat treatment step of drying the mixture prepared through the mixture preparation step and performing heat treatment twice,
wherein the mixture preparation step is performed through the following Schemes I and II:

<Scheme I> 1.1(Li₂CO₃) + 0.3(Ti₂O₃) → 2(Li_{1.1}Ti_{0.3}O) + 1.1(CO₂)

At this time, Ti of the product Li_{1.1}Ti_{0.3}O has an oxidation number of +3.

< Scheme II> 2(Li_{1.1}Ti_{0.3}O) + 0.6(Ti₂O₃) → 2(Li_{1.1}Ti_{0.9}O₂)

According to a preferable aspect of the present invention, after the drying heat treatment step, an additive mixing step in which CNT is added to the mixture heat-treated through the drying heat treatment step in a weight ratio of 8: 2 to 9: 1 is further performed.

According to a more preferable aspect of the present invention, the heat treatment is performed by first heat-treating the mixture at a temperature of 550 °C to 650 °C for 8 to 12 hours and then second heat-treating the mixture that has undergone first heat-treating, at temperature at 800 °C to 1200 °C for 18 to 36 hours.

In addition, an object of the present invention may also be achieved by providing a lithium secondary battery including: a negative electrode including the negative electrode active material for lithium secondary batteries having an R-3m structure; a positive electrode including a positive electrode active material; and a non-aqueous electrolyte.

### ADVANTAGEOUS EFFECTS

The negative electrode active material for lithium secondary batteries and the method of preparing the same according to the present invention exhibit an excellent effect of providing a negative electrode active material for lithium secondary batteries having an R-3m structure exhibiting a high capacity and excellent lifespan characteristics, particularly exhibiting a high capacity during high-rate charge and discharge.

In addition, the present invention has an excellent effect of providing a lithium secondary battery including the negative electrode active material for lithium secondary batteries having the R-3m structure.

### DESCRIPTION OF THE DRAWINGS

FIG. 1 shows a diagram illustrating the X-ray diffraction (XRD) measurement results of lithium tin oxide (LTO) according to the present invention.
FIG. 2 shows a schematic cross-sectional view of a lithium secondary battery according to the present invention.
FIG. 3 shows a graph illustrating the charge/discharge efficiency of a secondary battery including a Li₄Ti₅O₁₂ negative electrode active material having a spinel structure.
FIG. 4 shows a graph of Li_{1.1}Ti_{0.9}O₂ in which no Li₂TiO₃ phase is detected between 18° and 25° in *in-situ* XRD measurement.
FIG. 5 shows a graph illustrating the charge/discharge efficiency of a secondary battery including the Li_{1.1}Ti_{0.9}O₂ negative electrode active material according to the present invention.
FIG. 6 shows a graph illustrating the charge/discharge efficiency of a secondary battery including a Li_{1.1}Ti_{0.9}O₂ + CNT negative electrode active material according to the present invention.
FIG. 7 shows a graph illustrating the *in-situ* XDR measurement results of the Li_{1.1}Ti_{0.9}O₂ negative electrode active material powder according to the present invention and a secondary battery including the same.
FIGS. 8 to 11 show graphs illustrating changes in 2*θ* (theta) values for each XDR peak during charge and discharge in the *in-situ* XRD measurement area of a secondary battery including the Li_{1.1}Ti_{0.9}O₂ negative electrode active material according to the present invention.
FIGS. 12 and 13 show graphs illustrating the XRD peaks according to the structure of a secondary battery including the Li_{1.1}Ti_{0.9}O₂ negative electrode active material according to the present invention.
FIG. 14 shows a graph illustrating the results of structural analysis of the Li_{1.1}Ti_{0.9}O₂ negative electrode active material according to the present invention.

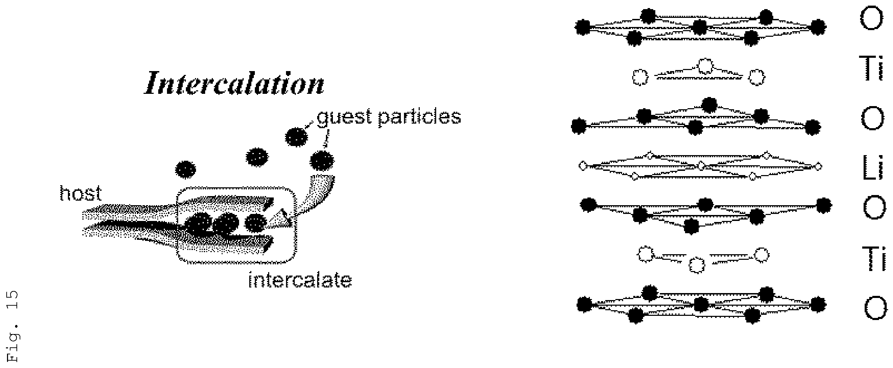

FIG. 15 shows a structural diagram schematically illustrating the layered structure of the Li_{1.1}Ti_{0.9}O₂ negative electrode active material according to the present invention.

### BEST MODE

Hereinafter, preferred embodiments of the present invention and the properties of each component will be described in detail. However, this is intended to describe them in detail to enable a person having ordinary skill in the art to which the present invention pertains to easily implement the present invention and does not mean that the technical idea and scope of the present invention are limited thereby.

The present invention provides a negative electrode active material for lithium secondary batteries having an R-3m structure including Li_{1.1}Ti_{0.9}O₂; and a method of preparing a negative electrode active material for lithium secondary batteries, the method including a process of preparing a mixture by mixing Li₂CO₃ and Ti₂O₃ in a solid state so that the molar ratio of Li: Ti is 1.1: 0.9 and drying the mixture and performing heat treatment twice.

Among the components of the negative electrode active material for lithium secondary batteries having an R-3m structure prepared by the above-described process, the mixture prepared by mixing in a solid state is prepared by a process of Schemes I and II below, and the mixture prepared through Schemes I and II below is prepared as the negative electrode active material for lithium secondary batteries having an R-3m structure.

<Scheme I> 1.1(Li₂CO₃) + 0.3(Ti₂O₃) → 2(Li_{1.1}Ti_{0.3}O) + 1.1(CO₂)

At this time, Ti of the product Li_{1.1}Ti_{0.3}O has an oxidation number of +3.

< Scheme II> 2(Li_{1.1}Ti_{0.3}O) + 0.6(Ti₂O₃) → 2(Li_{1.1}Ti_{0.9}O₂)

In addition, the present invention provides a lithium secondary battery including: a negative electrode including the negative electrode active material for lithium secondary batteries having an R-3m structure including Li_{1.1}Ti_{0.9}O₂ as the negative electrode active material; a positive electrode including a positive electrode active material capable of intercalating and deintercalating lithium ions; and a non-aqueous electrolyte.

Lithium-transition metal oxides are primarily used as effective positive electrode active materials because they form spinel and layered network structures, which facilitate the intercalation and deintercalation of lithium ions. However, since these lithium-transition metal oxides are high-potential compounds with a charge and discharge potential of approximately 4.3 V, they may not be used as negative electrode active materials.

According to the present invention, in a lithium-transition metal oxide structure such as LiCoO₂, which has been conventionally used as a positive active material, Co is substituted with Ti, a different metal element.

In other words, the negative electrode active material of the present invention exhibits a higher density than that of conventional graphite-based active materials, and thus is capable of increasing the energy density per volume. In addition, the negative electrode active material of the present invention also has a smaller volume change due to intercalation and deintercalation of lithium ions compared to the conventional metal or alloy-based active materials.

The negative electrode active material of the present invention has superior safety with organic electrolytes compared to carbon-based negative electrode active materials.

As the lithium raw material, a lithium-containing watersoluble salt selected from the group consisting of lithium carbonate, lithium hydroxide, lithium nitrate, lithium acetate, and mixtures thereof may be used.

As the Ti raw material, one selected from the group consisting of Ti and an oxide and a hydroxide including the same may be used. Specific examples include Ti and TiO₂, but are not limited thereto.

According to one embodiment of the present invention, a negative electrode active material for lithium secondary batteries including Li_{1.1}Ti_{0.9}O₂ may be prepared by a method including a process of preparing a mixture by mixing Li₂CO₃ and Ti₂O₃ in a solid state so that the molar ratio of Li: Ti is 1.1: 0.9 and drying the mixture and performing heat treatment twice.

At this time, the mixing process may be performed using a ball mill at 150 to 250 rpm, preferably 180 to 200 rpm, for 12 to 18 hours, preferably 14 to 16 hours. Next, after recovery, drying is performed at a temperature of 80 to 100 °C, preferably 85 to 95 °C, most preferably 90 °C, for 22 to 26 hours, preferably 23 to 25 hours, and then a heat treatment process is performed.

The heat treatment process may be performed by performing first heat treatment at 550 to 650 °C, preferably 580 to 620°C, and most preferably 600 °C for 8 to 12 hours, preferably 9 to 11 hours, and most preferably 10 hours, and then performing second heat treatment at 800 to 1200 °C, preferably 900 to 1100 °C, and most preferably 1000 °C for 18 to 36 hours, preferably 20 to 28 hours, more preferably 22 to 26 hours, and most preferably 24 hours. When the heat treatment temperature is out of the above-described range, an impurity phase may be formed, and this impurity phase may cause a decrease of the capacity and lifespan, which is not preferable.

In addition, the heat treatment process is preferably performed under a redox atmosphere. Specifically, it can be performed in an atmosphere such as a vacuum, an oxygen atmosphere, a nitrogen atmosphere, an argon atmosphere, an N₂/H₂ mixed gas atmosphere, a CO/CO₂ mixed gas atmosphere, a helium atmosphere, an H₂ gas atmosphere, or a combination thereof.

The negative electrode active material for lithium secondary batteries prepared as described above includes Li_{1.1}Ti_{0.9}O₂ having excellent capacity characteristics per unit volume, thereby having excellent capacity characteristics and improving the initial efficiency and lifespan characteristics of the battery.

Preferably, according to one embodiment of the present invention, a negative electrode active material for lithium secondary batteries may be provided by further including carbon nanotube (CNT) in an amount of 10 to 20 parts by weight based on the total weight of the negative electrode active material Li_{1.1}Ti_{0.9}O₂.

In addition, according to one preferred embodiment of the present invention, a negative electrode active material for lithium secondary batteries may be provided characterized in that CNT is mixed in a weight ratio of 9: 1 with Li_{1.1}Ti_{0.9}O₂.

According to another embodiment of the present invention, the present invention provides a lithium secondary battery including: a negative electrode including the negative electrode active material, a positive electrode including a positive electrode active material; and an electrolyte.

Lithium secondary batteries may be classified into lithium ion batteries, lithium ion polymer batteries, and lithium polymer batteries depending on the type of separator and electrolyte used, and may be classified into a cylindrical type, a prismatic type, a coin type, a pouch type, and the like depending on the shape, and may be classified into a bulk type and a thin film type depending on the size. Since the structure and manufacturing method of these batteries are widely known in the art, a detailed description is omitted.

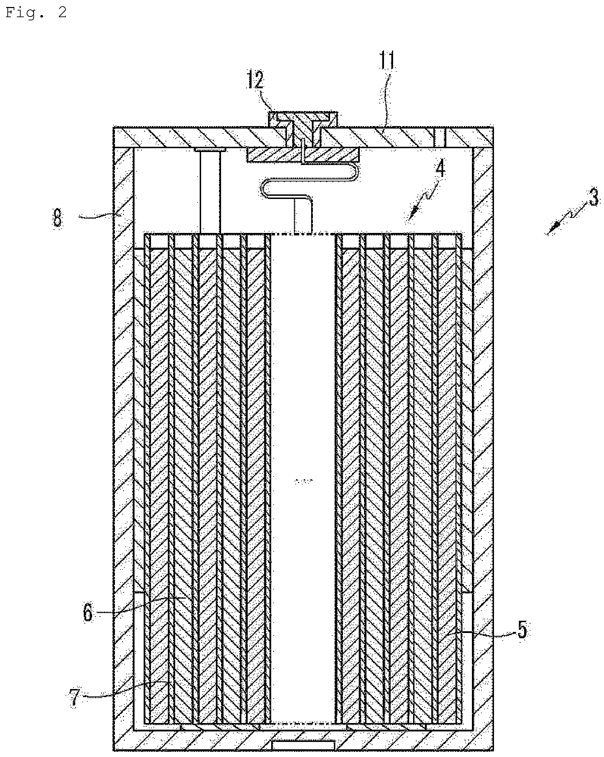

FIG. 2 shows a schematic cross-sectional view of a lithium secondary battery according to the present invention, and the manufacturing process of the lithium secondary battery of the present invention is described below with reference to FIG. 2.

The lithium secondary battery 3 may be manufactured by placing into a case 8 an electrode assembly 4 including a positive electrode 5, a negative electrode 6, and a separator 7 between the positive electrode 5 and the negative electrode 6, and then injecting an electrolyte into an upper portion of the case 8 and sealing with a cap plate 11 and a gasket 12.

The negative electrode of the present invention includes a current collector and a negative electrode active material layer formed on the current collector, and the negative electrode active material layer includes a negative electrode active material.

The negative electrode active material for lithium secondary batteries manufactured as described above includes Li_{1.1}Ti_{0.9}O₂, whose 2*θ* (theta) value during charge and discharge varies in an *in-situ* X-ray diffraction (XRD) measurement voltage range of 1.5 V to 0.0 V and XRD peaks vary in ranges of 34° to 36°, 42° to 43°, 56° to 57°, and 62° to 62.5°.

The negative electrode active material is the same as described above, and is preferably included in an amount of 1% to 99% by weight based on the total weight of the negative electrode active material layer, and more preferably, it may be included in an amount of 10% to 98% by weight. When the amount is out of the above-described range, there is a concern that the capacity may decrease or the bonding strength with a current collector may be reduced due to a decrease in the relative amount of binder, which is not preferable.

The negative electrode may be manufactured by mixing the negative electrode active material, a binder, and optionally a conductive material in a solvent to prepare a composition for forming a negative electrode active material layer, and then applying the composition to a negative electrode current collector such as copper. Since such an electrode manufacturing method is widely known in the art, a detailed description thereof will be omitted herein.

The binder serves to adhere particles of the negative electrode active material to each other well and also to adhere the negative electrode active material to a current collector well. Examples thereof include polyvinyl alcohol, carboxymethyl cellulose, hydroxypropylene cellulose, diacetylene cellulose, polyvinyl chloride, polyvinyl pyrrolidone, carboxylated polyvinyl chloride, polyvinyl difluoride, a polymer containing ethylene oxide, polyvinyl pyrrolidone, polyurethane, polytetrafluoroethylene, polyvinylidene fluoride, polyethylene, polypropylene, styrene-butadiene rubbers, acrylated styrene-butadiene rubbers, epoxy resins, nylon, and the like, but are not limited thereto.

The conductive material is used to provide conductivity to the electrodes, and any electronically conductive materials may be used as long as they do not cause a chemical change in a manufactured battery. Examples thereof include natural graphite, artificial graphite, carbon black, acetylene black, Ketjen black, carbon fiber, metal powder of copper, nickel, aluminum, silver, or the like, metal fiber, and the like, and also conductive materials such as polyphenylene derivatives may be mixed and used.

The solvent may be N-methylpyrrolidone or the like, but is not limited thereto.

The current collector may be selected from the group consisting of copper foil, nickel foil, stainless steel foil, titanium foil, nickel foam, copper foam, polymer substrate coated with a conductive metal, and combinations thereof.

The positive electrode includes a current collector and a positive electrode active material layer formed on the current collector, and the positive electrode active material layer includes a positive electrode active material.

The positive electrode active material may be a compound enabling reversible intercalation and deintercalation of lithium (lithiated intercalation compound). Specifically, one or more of a composite oxide of lithium and a metal selected from cobalt, manganese, nickel, molybdenum, titanium, and combinations thereof may be used.

In addition, a positive electrode active material having a coating layer on the surface of the compound may be used, or a mixture of the compound and a compound having a coating layer may be used. The coating layer may include at least one coating element compound selected from the group consisting of an oxide of the coating element, a hydroxide of the coating element, an oxyhydroxide of the coating element, an oxycarbonate of the coating element, and a hydroxycarbonate of the coating element. The compounds forming these coating layers may be amorphous or crystalline. The coating element included in the coating layer may be Mg, Co, K, Na, Ca, Si, V, Sn, Sr, Ba, Al, P, Sb, Cr, Ge, Ga, B, As, Zn, or a mixture thereof. The coating layer forming process may be performed by any coating method (e.g., spray coating, dipping, etc.) as long as it may coat the compound with these elements without adversely affecting the properties of the positive electrode active material. Since this is well understood by one of ordinary skill in the art, a detailed description thereof will be omitted.

Like the negative electrode, the positive electrode may also be manufactured by mixing the positive electrode active material, a binder, and optionally a conductive material to prepare a composition for forming a positive electrode active material layer, and then applying the composition for forming the positive electrode active material layer to a positive electrode current collector such as aluminum.

As an electrolyte filled into the lithium secondary battery, a non-aqueous electrolyte or a known solid electrolyte may be used.

As the non-aqueous electrolyte, a lithium salt dissolved in a non-aqueous organic solvent may be used. The lithium salt serves as a source of lithium ions in a battery, enabling the basic operation of a lithium secondary battery. The lithium salt may be selected from the group consisting of LiPF₆, LiBF₄, LiSbF₆, LiAsF₆, LiClO₄, LiCF₃SO₃, LiC₄F₉SO₃, LiN(CF₃SO₂)₂, LiN(C₂F₅SO₂)₂, LiAlO₄, LiAlCl₄, LiN(CₚF₂ₚ₊₁SO₂)(CqF_{2q+1}SO₂) (wherein p and q are natural numbers), LiSO₃CF₃, LiCl, LiI, and a combination thereof.

The concentration of the lithium salt may be within the range of 0.6 to 2.0 M, and the range of 0.7 to 1.6 M is preferable. When the concentration of the lithium salt is less than 0.6 M, the conductivity of the electrolyte decreases, resulting in a decrease in the performance of the electrolyte. When it exceeds 2.0 M, the viscosity of the electrolyte increases, resulting in a decrease in the mobility of lithium ions.

The non-aqueous organic solvent serves as a medium through which ions involved in the electrochemical reactions of the battery may migrate. Examples of the non-aqueous organic solvent may include a carbonate-based, ester-based, ether-based, ketone-based, alcohol-based, or aprotic solvent.

Examples of the carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC), butylene carbonate (BC), and the like.

Examples of the ester-based solvent may include n-methyl acetate, n-ethyl acetate, n-propyl acetate, dimethyl acetate, methylpropionate, ethylpropionate, γ-butyrolactone, decanolide, valerolactone, mevalonolactone, caprolactone, and the like.

Examples of the ether-based solvent may include dibutyl ether, tetraglyme, diglyme, dimethoxyethane, 2-methyltetrahydrofuran, tetrahydrofuran, and the like.

### Examples of the ketone-based solvent may include cyclohexanone and the like

Examples of the alcohol-based solvent may include ethyl alcohol, isopropyl alcohol, and the like.

Examples of the aprotic solvent may include: nitriles such as X-CN (X is a linear, branched, or cyclic hydrocarbon group having 2 to 20 carbon atoms and may include a double bond aromatic ring or ether bond); amides such as dimethylformamide; dioxolanes such as 1,3-dioxolane; and sulfolanes.

The non-aqueous organic solvents may be used alone or in combination of one or more, and the mixing ratio when using in combination of one or more may be appropriately controlled depending on the intended battery performance, which is widely understood by one of ordinary skill in the art.

In addition, the carbonate-based solvent may preferably be used as a mixture of a cyclic carbonate and a chain carbonate. In this case, when the cyclic carbonate and the chain carbonate are mixed and used in a volume ratio of 1: 1 to 1: 9, excellent electrolyte performance may be exhibited.

The non-aqueous organic solvent of the present invention may further include an aromatic hydrocarbon-based organic solvent in the carbonate-based solvent. In this case, the carbonate-based solvent and the aromatic hydrocarbon-based organic solvent may be mixed in a volume ratio of 1: 1 to 30: 1.

Preferably, the aromatic hydrocarbon-based organic solvent is selected from the group consisting of benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, and a combination thereof.

The non-aqueous electrolyte may further include a vinylene carbonate-based or ethylene carbonate-based compound to improve the battery lifespan.

Representative examples of the ethylene-based carbonate compound include difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. When such a life-improving additive is further used, the usage amount may be appropriately controlled.

The non-aqueous electrolyte may further include an additive such as an overcharge-preventing agent such as ethylene carbonate and pyrocarbonate.

In addition, as the solid electrolyte, a polyethylene oxide polymer electrolyte or a polymer electrolyte containing one or more polyorganosiloxane side chains or polyoxyalkylene side chains, a sulfide electrolyte such as Li₂S-SiS₂, Li₂S-GeS₂, Li₂S-P₂S₅, or Li₂S-B₂S₃, an inorganic electrolyte such as Li₂S-SiS₂-Li₃PO₄ or Li₂S-SiS₂-Li₃SO₄, and the like may be preferably used.

Depending on the type of lithium secondary battery, a separator may be present between a positive electrode and a negative electrode. As such separators, polyethylene, polypropylene, polyvinylidene fluoride, or multilayer films of two or more layers thereof may be used, and mixed multilayer films such as a polyethylene/polypropylene two-layer separator, a polyethylene/polypropylene/polyethylene three-layer separator, and a polypropylene/polyethylene/polypropylene three-layer separator may also be used.

### Reference Example 1: Preparation of LiTiO₂

Li₂CO₃ and Ti₂O₃ were mixed in a solid state so that the molar ratio of Li: Ti was 1: 0.9. At this time, the mixing process was performed at 200 rpm for three hours using a ball mill. Then, the resulting mixture was recovered, dried at 60 to 80 °C, and subjected to first heat treatment at 500 °C for 10 hours. Thereafter, second heat treatment was performed at 1000 °C for 20 hours, and then the mixture was cooled to room temperature to prepare a negative electrode active material for lithium secondary batteries having an R-3m structure of LiTiO₂ (LTO).

### Example 1: Preparation of Li_{1.1}Ti_{0.9}O₂

Li₂CO₃ and Ti₂O₃ were mixed in a solid state through Schemes I and II below so that the molar ratio of Li: Ti was 1.1: 0.9. At this time, the mixing process was performed at 200 rpm for 15 hours using a ball mill.

<Scheme I> 1.1(Li₂CO₃) + 0.3(Ti₂O₃) → 2(Li_{1.1}Ti_{0.3}O) + 1.1(CO₂)

At this time, Ti of the product Li_{1.1}Ti_{0.3}O has an oxidation number of +3.

<Scheme II> 2(Li_{1.1}Ti_{0.3}O) + 0.6(Ti₂O₃) → 2(Li_{1.1}Ti_{0.9}O₂)

Then, the mixture was recovered, dried at 90 °C for 24 hours, and then subjected to first heat treatment at 600 °C for 10 hours. Thereafter, secondary heat treatment was performed at 1,000 °C for 24 hours, and then the mixture was cooled to room temperature to prepare Li_{1.1}Ti_{0.9}O₂ (LTO) having an R-3m structure, which is a negative electrode active material for lithium secondary batteries.

### Example 2: Preparation of Li_{1.1}Ti_{0.9}O₂ + CNT

A negative electrode active material for lithium secondary batteries of Li_{1.1}Ti_{0.9}O₂ + CNT was prepared in the same manner as in Example 1, except that CNT was added to Li_{1.1}Ti_{0.9}O₂ having the R-3m structure prepared in Example 1 in a weight ratio of 9: 1.

### Test Example 1: Structural analysis of the negative electrode active material

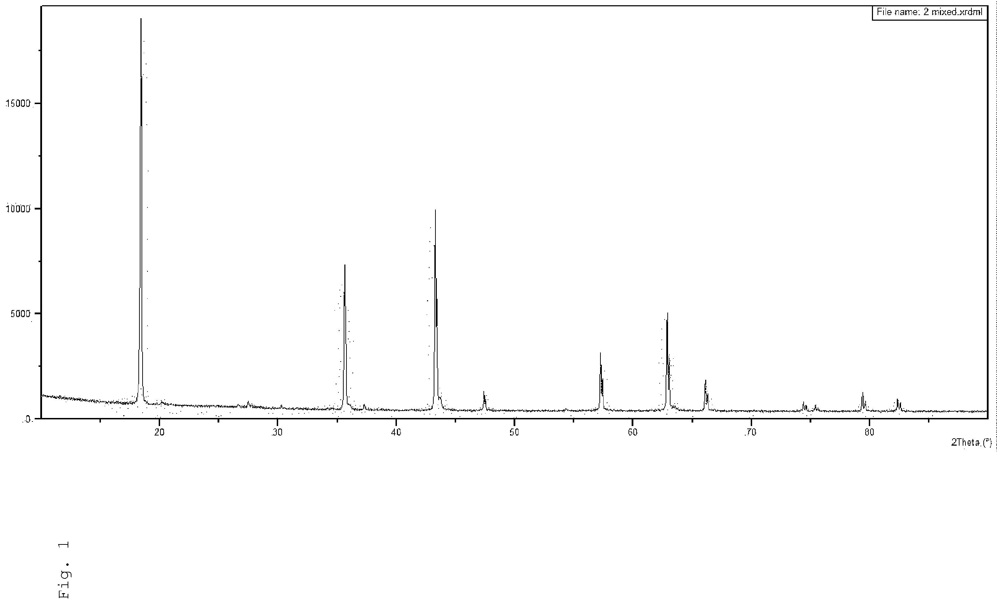

For a structural analysis of the negative electrode active material prepared in Example 1, an X-ray diffraction pattern (Philips X'pert MPD) was measured. FIG. 1 shows a diagram illustrating the XRD measurement results of the LTO prepared in Example 1.

As shown in FIG. 1 below, it was confirmed that the XRD pattern of the LTO (Li_{1.1}Ti_{0.9}O₂) prepared through Example 1 of the present invention was similar to the XRD pattern of a general layered structure, and accordingly, it was found that the LTO negative electrode active material according to the present invention may be effectively used for a secondary battery.

### Test Example 2: Evaluation of electrochemical characteristics of the Li_{1.1}Ti_{0.9}O₂ battery having R-3m structure

The following experiment was performed to evaluate the electrochemical characteristics (charge/discharge capacity) of the negative electrode including the negative electrode active material of the present invention.

The test electrode was manufactured by coating a copper foil with a powder mixture and a poly(vinylidene difluoride) binder (10% by weight). The charge/discharge test was performed using a three-electrode cell at a constant current of 18.1 mA/g. A 1 mol dm-3(M)LiClO₄ electrolyte containing ethylene carbonate (EC) and diethylcarbonate (DEC) (EC + DEC) (Kishida Chemical Co., Lithium Battery Grade) in a 1: 1 ratio was used. The lithium foil was used as the counter and reference electrodes. CV measurements were performed at a sweep rate of 0.5 mV/S between 3.0 and 0.0 V. All electrochemical measurements were performed at <-60 °C in an argon-filled glove box (Miwa, MDB-1B+MM3-P60S). All potential were referenced to volts vs. Li/Li⁺.

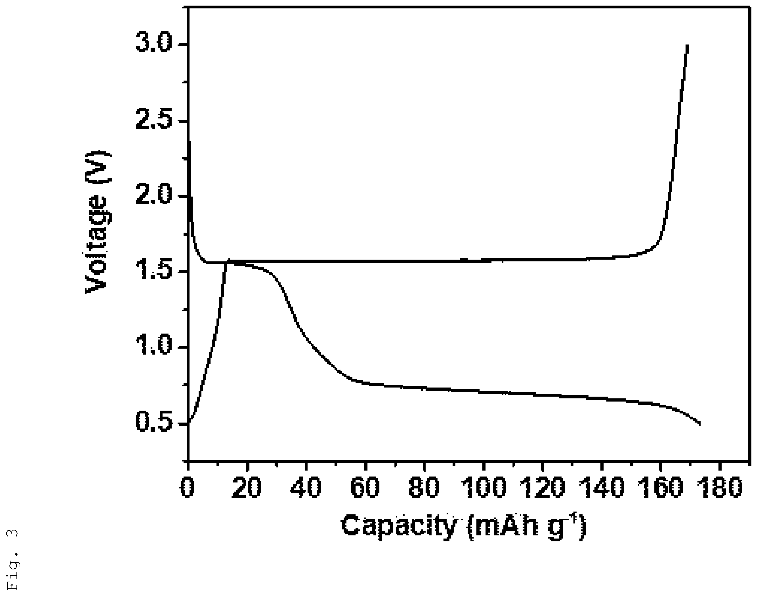

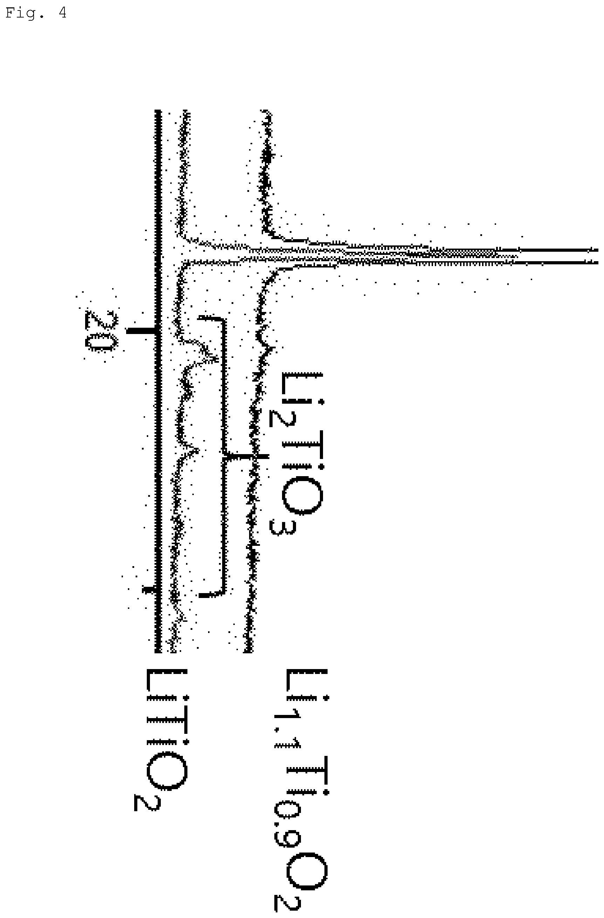

FIG. 3 shows a graph illustrating the charge/discharge efficiency of a secondary battery including a LiTiO₂ negative electrode active material of Reference Example 1, which was 160 mAh/g. FIG. 4 shows a graph illustrating the generation of Li₂TiO₃ separated from Li₄Ti₅O₁₂ and Li_{1.1}Ti_{0.9}O₂ at temperatures ranging from 18 to 25 °C. As can be seen here, the generation of Li₂TiO₃ was suppressed in Li_{1.1}Ti_{0.9}O₂.

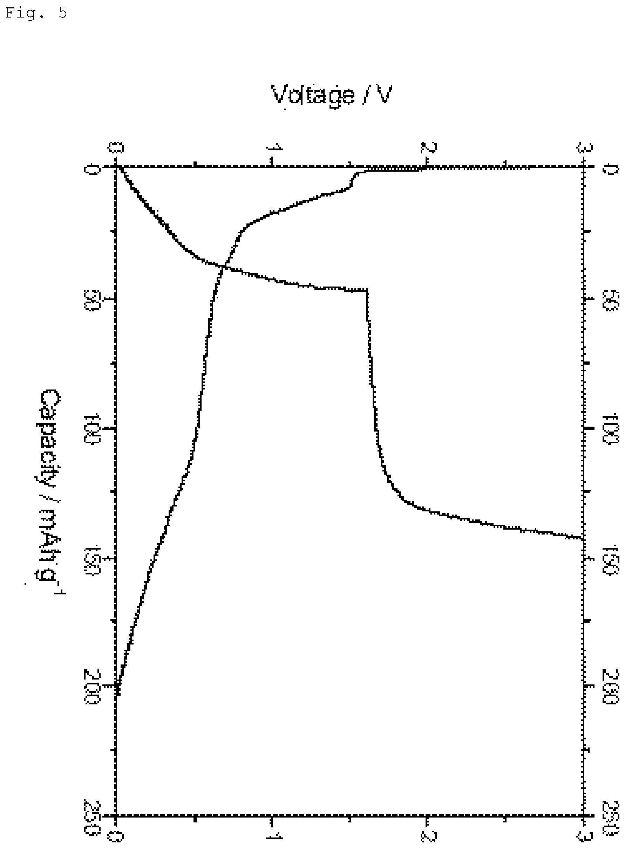

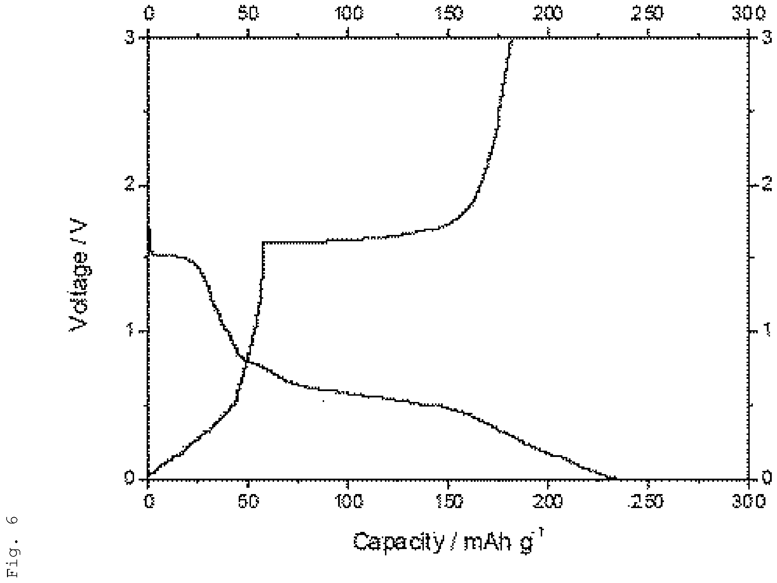

FIG. 5 shows a graph illustrating the charge/discharge efficiency of a secondary battery including the Li_{1.1}Ti_{0.9}O₂ negative electrode active material according to the present invention. FIG. 6 shows a graph illustrating the charge/discharge efficiency of a secondary battery including a Li_{1.1}Ti_{0.9}O₂ + CNT negative electrode active material according to the present invention. As can be seen here, the first charge/discharge capacity of Li_{1.1}Ti_{0.9}O₂ was 200 mAh/g, and when the pure Li_{1.1}Ti_{0.9}O₂ was coated with CNT, the first charge/discharge capacity was 230 mAh/g.

From these results, it was found that the Li_{1.1}Ti_{0.9}O₂ and Li_{1.1}Ti_{0.9}O₂ + CNT negative electrode active materials according to the present invention have superior charge/discharge efficiency compared to the Li₄Ti₅O₁₂ negative electrode active material.

### Test Example 3: In-situ XDR analysis of Li_{1.1}Ti_{0.9}O₂ battery

The Li_{1.1}Ti_{0.9}O₂ (LTO powder) prepared in Example 1 and the secondary battery (*in situ* cell) manufactured using the same were analyzed using *in-situ* XRD.

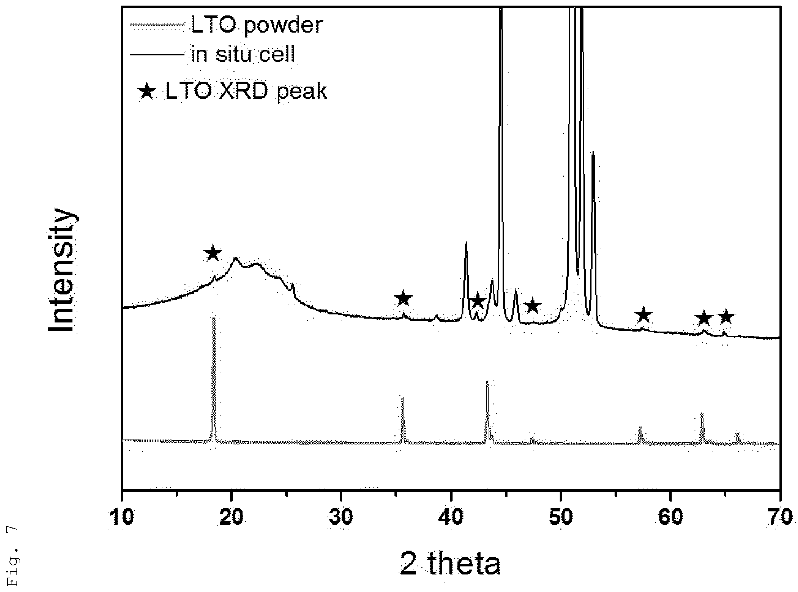

The measurement was performed by changing the voltage from 3.0 V to 0.0 V and then changing the voltage back to 3.0 V. The results are shown in FIG. 7.

As shown in FIG. 7, it was confirmed that the secondary battery *(in situ* cell) manufactured using Li_{1.1}Ti_{0.9}O₂ prepared in Example 1 exhibited four main peaks at 2*θ* (theta) values of 34° to 36°, 42° to 43°, 56° to 57°, and 62° to 62.5°.

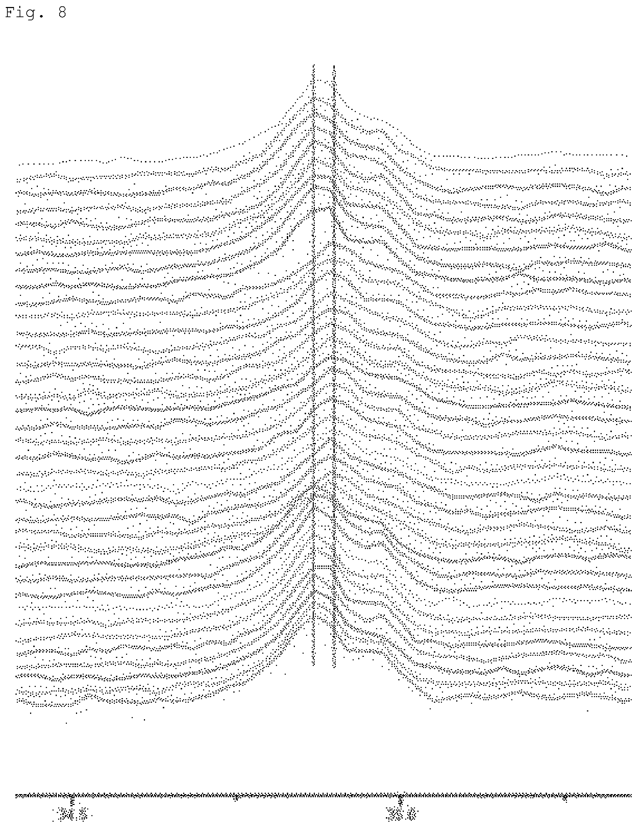

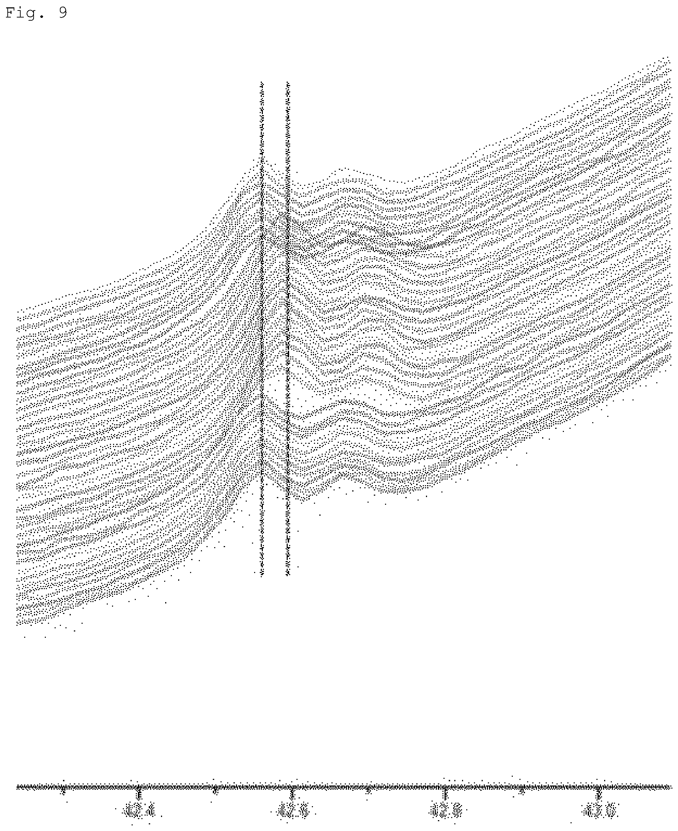

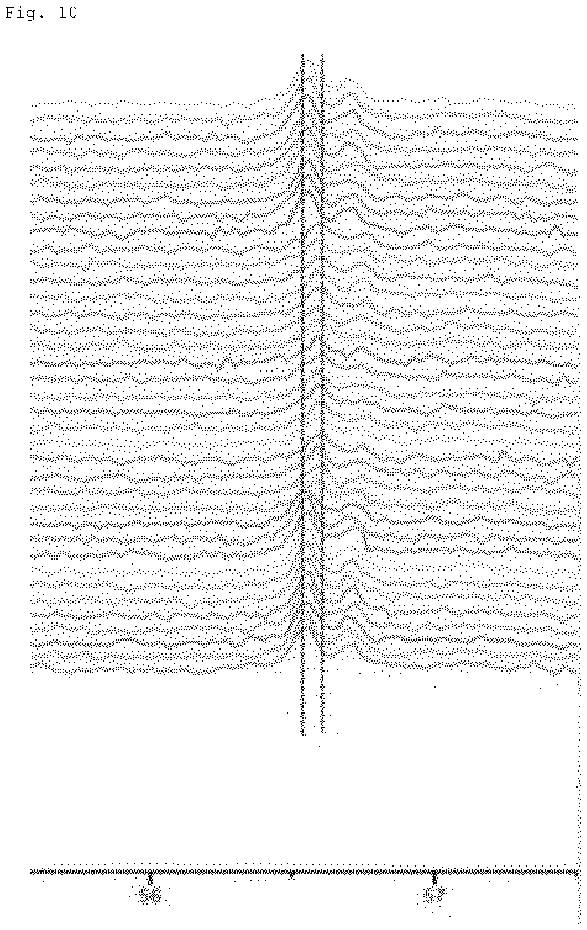

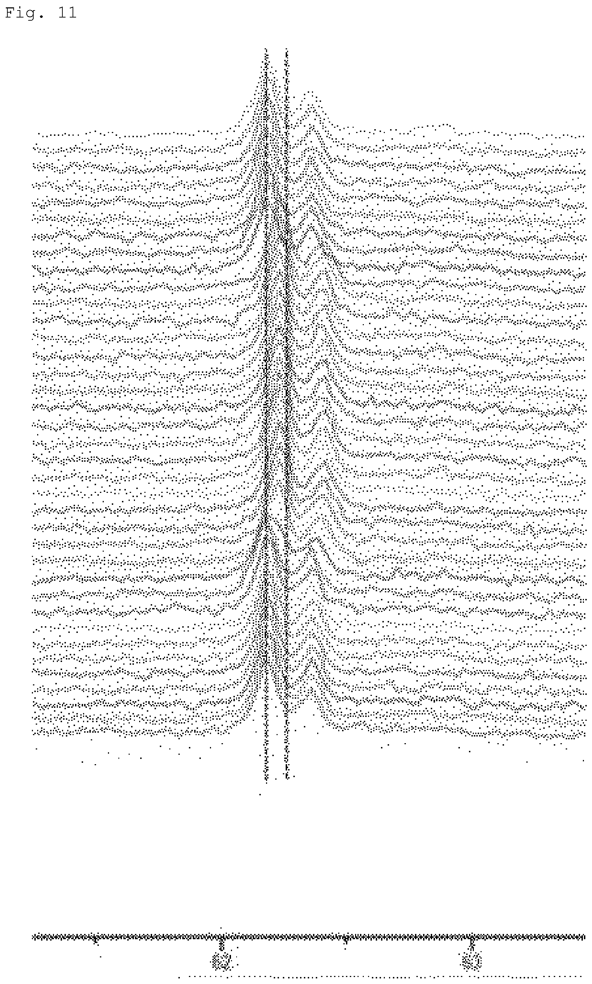

In addition, as shown in FIGS. 8 to 11, it was found that the four peaks varied depending on the voltage in the range of the 2*θ* (theta) values. FIGS. 8 to 11 show in more detail the range of the variation of the 2*θ* (theta) values of the XRD peaks at 34 to 36°, 42 to 43°, 56 to 57°, and 62 to 62.5° according to the charge/discharge voltage (from 1.0 V to 0.0 V).

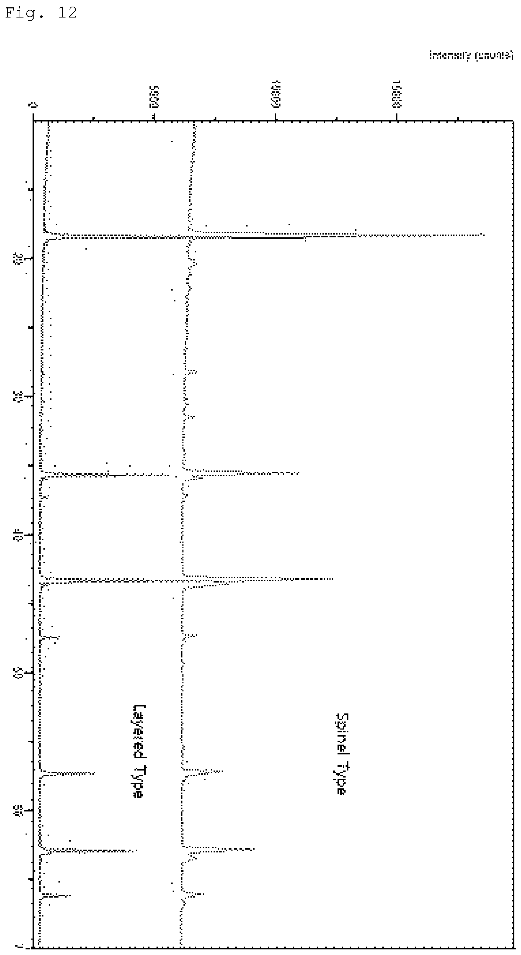

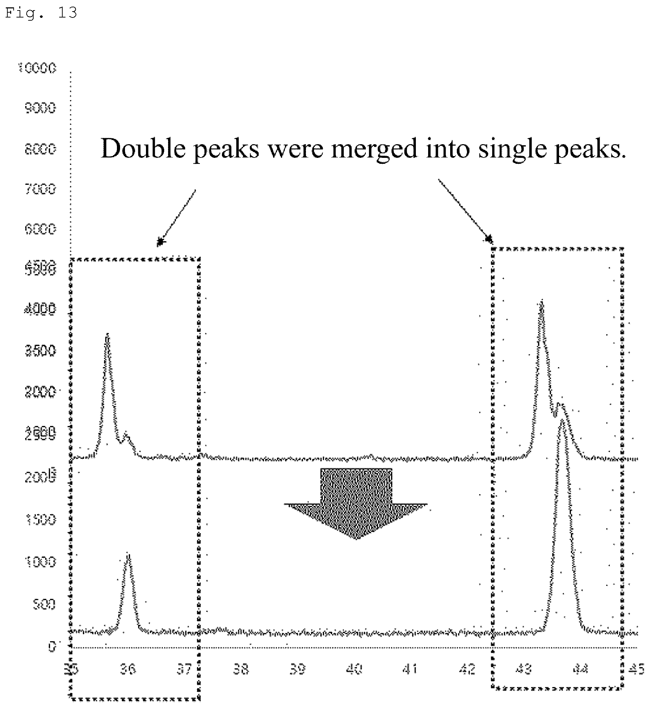

In addition, as shown in FIGS. 12 and 13 below, it can be seen that the XRD peaks of the secondary battery manufactured using the Li_{1.1}Ti_{0.9}O₂ negative electrode active material according to the present invention consist of single peaks in the regions of 35° to 36°, 43° to 44°, 57° to 58°, 62° to 63°, and 65 to 67°, indicating the presence of Li_{1.1}Ti_{0.9}O₂.

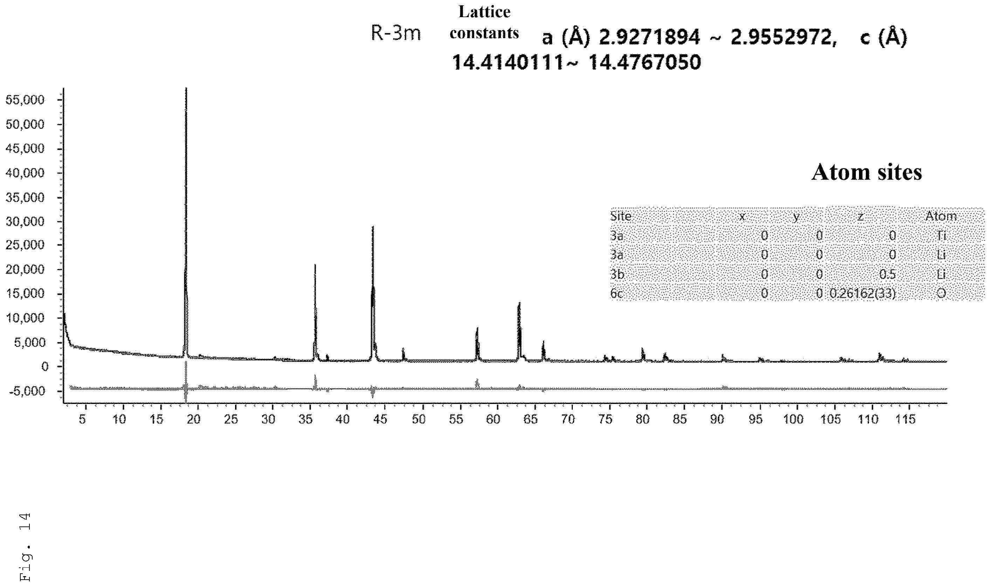

In addition, as shown in FIG. 14 below, as a result of the Rietveld structural analysis, it can be seen that the Li_{1.1}Ti_{0.9}O₂ negative electrode active material according to the present invention has an R-3m structure, the lattice constant values are an 'a value' of 2.9 to 2.96 (Å) and a 'c value' of 14.4 to 14.48(Å), and each atom is located at the Li (0, 0, 0) 3a site, the Li2 (0, 0, 0.5) 3b site, the Ti (0, 0, 0) 3a site, and the O (0, 0, 0.26162) 6c site.

Therefore, the negative electrode active material for lithium secondary batteries having an R-3m structure according to the present invention and the method for preparing the same can provide a negative electrode active material for lithium secondary batteries exhibiting high capacity and excellent lifespan characteristics, particularly exhibiting a high capacity during high-rate charge and discharge.

In addition, a lithium secondary battery including the negative electrode active material for lithium secondary batteries can be provided.

### <Reference numerals>

3: Lithium secondary battery
4: Electrode assembly
5: Positive electrode
6: Negative electrode
7: Separator
8: Case
11: Cap plate
12: Gasket

## Claims

1. A negative electrode active material for lithium secondary batteries having an R-3m structure, the negative electrode active material comprising one selected from the group consisting of Li_{1.1}Ti_{0.9}O₂ and a mixture of Li_{1.1}Ti_{0.9}O₂ and carbon nanotube (CNT) in a weight ratio of 8: 2 to 9: 1, wherein the Li_{1.1}Ti_{0.9}O₂ is prepared such that the molar ratio of Li: Ti is 1.1: 0.9 through the following Schemes I and II:
<Scheme I> 1.1(Li₂CO₃) + 0.3(Ti₂O₃) → 2(Li_{1.1}Ti_{0.3}O) + 1.1(CO₂)
At this time, Ti of the product Li_{1.1}Ti_{0.3}O has an oxidation number of +3.
<Scheme II> 2(Li_{1.1}Ti_{0.3}O) + 0.6(Ti₂O₃) → 2(Li_{1.1}Ti_{0.9}O₂)

2. The negative electrode active material for lithium secondary batteries having an R-3m structure according to claim 1, wherein the negative electrode active material includes Li_{1.1}Ti_{0.9}O₂, which has a 2*θ* (theta) value during charge and discharge in *in-situ* X-ray diffraction (XRD) measurement voltage range of 1.5 V to 0.0 V and XRD peaks change in ranges of 34° to 36°, 42° to 43°, 56° to 57°, and 62° to 62.5°.

3. The negative electrode active material for lithium secondary batteries having an R-3m structure according to claim 1, wherein the negative electrode active material includes Li_{1.1}Ti_{0.9}O₂, in which no Li₂TiO₃ phase is detected between 18° and 25° in *in-situ* XRD measurement.

4. A method of preparing a negative electrode active material for lithium secondary batteries having an R-3m structure, the method comprising:
a mixture preparation step of preparing a mixture by mixing Li₂CO₃ and Ti₂O₃ in a solid state so that the molar ratio of Li: Ti is 1.1: 0.9; and
a drying heat treatment step of drying the mixture prepared through the mixture preparation step and performing heat treatment twice,
wherein the mixture preparation step is performed through the following Schemes I and II:
<Scheme I> 1.1(Li₂CO₃) + 0.3(Ti₂O₃) → 2(Li_{1.1}Ti_{0.3}O) + 1.1(CO₂)
At this time, Ti of the product Li_{1.1}Ti_{0.3}O has an oxidation number of +3.
<Scheme II> 2(Li_{1.1}Ti_{0.3}O) + 0.6(Ti₂O₃) → 2(Li_{1.1}Ti_{0.9}O₂)

5. The method of preparing a negative electrode active material for lithium secondary batteries having an R-3m structure according to claim 4, wherein, after the drying heat treatment step, an additive mixing step in which CNT is added to the mixture heat-treated through the drying heat treatment step in a weight ratio of 8: 2 to 9: 1 is further performed.

6. The method of preparing a negative electrode active material for lithium secondary batteries having an R-3m structure according to claim 4, wherein the heat treatment is performed by first heat-treating the mixture at a temperature of 550 °C to 650 °C for 8 to 12 hours and then second heat-treating the mixture that has undergone first heat-treating, at temperature at 800 °C to 1200 °C °C for 18 to 36 hours.

7. A lithium secondary battery comprising: a negative electrode including the negative electrode active material for lithium secondary batteries having an R-3m structure according to any one of claims 1 to 3; a positive electrode including a positive electrode active material; and a non-aqueous electrolyte.
